# EUROPEAN PATENT APPLICATION

(11) **EP 4 811 488 A1**
(43) Date of publication of application: **23.09.2026**
(21) Application number: 24914531.9
(22) Date of filing: 02.01.2024
(51) Int. Cl.: H01M 10/0587, H01M 50/595

(54) **BATTERY CELL, BATTERY AND ELECTRIC DEVICE**

(71) Applicant: Contemporary Amperex Technology Co., Limited, Ningde, Fujian 352100 (CN)
(72) Inventor: LANG, Yaqiang, Ningde, Fujian 352100 (CN); LIN, Chenhui, Ningde, Fujian 352100 (CN); HE, Jianfu, Ningde, Fujian 352100 (CN); YE, Yonghuang, Ningde, Fujian 352100 (CN)
(74) Representative: Ziebig Hengelhaupt Intellectual Property Attorneys Patentanwaltskanzlei PartGmbB
(86) International application number: PCT/CN2024/070181
(87) International publication number: WO 2025/145294

(57) **Abstract**

A battery cell (100), a battery (1000), and an electric device (2000). The battery cell (100) comprises: a casing (10); an electrode assembly (20), which is arranged in the casing (10), wherein the electrode assembly (20) comprises an electrode sheet (21) and a separator (22), the electrode sheet (21) and the separator (22) being stacked and then wound to form the electrode assembly (20), and in the direction of winding of the electrode assembly (20), the electrode assembly (20) is provided with a winding tail end (20a); and a buffer member (30), which is arranged in the casing (10), wherein in the direction of stacking of the electrode sheet (21) and the separator (22), the buffer member (30) covers at least part of the winding tail end (20a).

## Description

### TECHNICAL FIELD

This application relates to the field of batteries, and in particular to a battery cell, a battery, and an electric device.

### BACKGROUND

Energy conservation and emission reduction are key to the sustainable development of the automobile industry, and electric vehicles have become an important part of the sustainable development of the automobile industry due to their advantages of energy saving and environmental friendliness. For electric vehicles, battery technology is an important factor related to their development.

During the charge and discharge of a battery, an electrode assembly swells, and a swelling force acting on an adjacent electrode assembly or a casing may easily cause uneven stress, affecting reliability and service life of the battery.

### SUMMARY

In view of the above problems, this application provides a battery cell, a battery, and an electric device, which can alleviate uneven stress affecting battery life in battery use.

In a first aspect, this application provides a battery cell, including: a casing; an electrode assembly, disposed in the casing, where the electrode assembly includes an electrode sheet and a separator, the electrode sheet and the separator are stacked and then wound to form the electrode assembly, and the electrode assembly is provided with a winding end along a winding direction of the electrode assembly; and a buffer member, disposed in the casing, where the buffer member covers at least a portion of the winding end along a stacking direction of the electrode sheet and the separator.

In the technical solution of the embodiments of this application, with the buffer member provided at the winding end, the buffer member can cover at least a portion of the winding end, and the buffer member can space the winding end of the electrode assembly from an adjacent structure. When the electrode assembly swells, the buffer member deforms, thereby alleviating to a certain extent stress concentration caused by the winding end protruding from another portion, equalizing forces on the two portions with a height difference, and improving the reliability and prolonging the service life of the battery cell.

In some embodiments, along the winding direction of the electrode assembly, an end of the electrode assembly is provided with a termination tape, and an end of the termination tape along the winding direction forms the winding end. In the above technical solution, the buffer member covers at least a portion of the termination tape, thereby alleviating to a certain extent stress concentration caused by the termination tape with a certain thickness protruding from the separator or the electrode sheet, equalizing forces on the two portions with a height difference, and prolonging the service life and improving the reliability of the battery cell.

In some embodiments, the termination tape includes a first tape segment and a second tape segment, the first tape segment covers an end of the separator or an end of the electrode sheet, the second tape segment is located on one side of the first tape segment, and the buffer member covers at least a portion of the second tape segment. In the above technical solution, the buffer member covers the second tape segment or a portion of the second tape segment, and the buffer member absorbs swelling stress through deformation, thereby alleviating to a certain extent stress concentration caused by the second tape segment protruding from the separator or the electrode sheet, equalizing forces on the two portions with a height difference, and prolonging the service life and improving the reliability of the battery cell.

In some embodiments, the termination tape includes a first tape segment and a second tape segment, the first tape segment covers an end of the separator or an end of the electrode sheet, the second tape segment is located on one side of the first tape segment, and the buffer member covers at least a portion of the first tape segment. In the above technical solution, the buffer member covers the first tape segment or a portion of the first tape segment, and the buffer member absorbs swelling stress through deformation, thereby alleviating to a certain extent stress concentration caused by the first tape segment with a certain thickness protruding from the separator or the electrode sheet, equalizing forces on the two portions with a height difference.

In some embodiments, the electrode sheet and the separator are wound around a winding axis, the termination tape has opposite first end portion and second end portion in an extension direction of the winding axis, and the buffer member covers the first end portion and/or the second end portion. In the above technical solution, the buffer member can cover the first end portion and/or the second end portion of the termination tape in the extension direction of the winding axis, thereby alleviating to a certain extent stress concentration caused by the first end portion or the second end portion protruding from the separator or the electrode sheet, equalizing forces on the two portions with a height difference, and prolonging the service life and improving the reliability of the battery cell.

In some embodiments, in the extension direction of the winding axis, a length dimension of the buffer member is not less than a length dimension of the termination tape. In the above technical solution, the buffer member can cover the end portion of the termination tape in the extension direction of the winding axis, thereby alleviating to a certain extent stress concentration caused by the end portion of the termination tape protruding from the separator or the electrode sheet, equalizing forces on the two portions with a height difference, and prolonging the service life and improving the reliability of the battery cell.

In some embodiments, a ratio of compression rates of the buffer member to the termination tape under 1 MPa is L1/L2, where 5≤L1/L2≤30, preferably 10≤L1/L2≤20. In the above technical solution, the buffer member can space the termination tape from an adjacent structure, and can effectively deform when the electrode assembly swells, thereby providing buffer, equalizing forces on the two portions with a height difference, reducing the probability of stress concentration caused by swelling of the electrode assembly; in addition, the buffer member can provide effective support, reducing the probability of wrinkling and deformation, and prolonging the service life and improving the reliability of the battery cell.

In some embodiments, a thickness ratio of the buffer member to the termination tape is H1/H2, where 10≤H1/H2≤100, preferably 10≤H1/H2≤20. In the above technical solution, excessive reduction in a volumetric energy density of the battery cell can be prevented, and the probability of stress concentration caused by swelling of the electrode assembly can be reduced, prolonging the service life and improving the reliability of the battery cell.

In some embodiments, a ratio of an area of a portion of the buffer member covering the termination tape to an area of the termination tape is S1/S2, where 0.1≤S1/S2≤1, preferably 0.8≤S1/S2≤1. In the above technical solution, S1/S2 is limited, so that the buffer member can effectively cover the termination tape, thereby reducing the possibility of stress concentration caused by the termination tape protruding from the separator or the electrode sheet, equalizing forces on the two portions with a height difference, and prolonging the service life and improving the reliability of the battery cell.

In some embodiments, along the stacking direction of the electrode sheet and the separator, the buffer member covers at least a portion of the separator and/or at least a portion of the electrode sheet. In the above technical solution, forces on the two portions with a height difference can be equalized, prolonging the service life and improving the reliability of the battery cell.

In some embodiments, along the winding direction of the electrode assembly, the end of the separator forms the winding end. In the above technical solution, the buffer member can space the separator from an adjacent electrode assembly or the casing. When the electrode assembly swells, the buffer member deforms, thereby alleviating to a certain extent stress concentration caused by the end of the separator with a certain thickness protruding from another portion, equalizing forces on the two portions with a height difference, and prolonging the service life and improving the reliability of the battery cell.

In some embodiments, a ratio of compression rates of the buffer member to the separator under 1 MPa is L1/L3, where 1≤L1/L3≤5, preferably 2≤L1/L3≤3.5. In the above technical solution, the buffer member can space the separator from an adjacent structure, and can effectively deform when the electrode assembly swells, thereby providing buffer, equalizing forces on the two portions with a height difference, reducing the probability of stress concentration caused by swelling of the electrode assembly; in addition, the buffer member can provide effective support, reducing the probability of wrinkling and deformation, and prolonging the service life and improving the reliability of the battery cell.

In some embodiments, a thickness ratio of the buffer member to the separator is H1/H3, where 50≤H1/H3≤700. In the above technical solution, excessive reduction in the volumetric energy density of the battery cell can be prevented, and the probability of stress concentration caused by swelling of the electrode assembly can be reduced, prolonging the service life and improving the reliability of the battery cell.

In some embodiments, a side of the end of the separator facing toward a center of the electrode assembly is provided with an adhesive material. In the above technical solution, the end of the separator can be directly bonded to an adjacent separator or electrode sheet, thereby fastening the electrode sheet and the separator, stabilizing the overall structure of the electrode assembly, reducing the probability of displacement and deformation, reducing wrinkling of the electrode sheet, reducing the probability of internal short circuits, and the like.

In some embodiments, along the winding direction of the electrode assembly, the end of the electrode sheet forms the winding end. In the above technical solution, when the electrode assembly swells, the buffer member deforms, thereby alleviating to a certain extent stress concentration caused by the end of the electrode sheet with a certain thickness protruding from another portion, equalizing forces on the two portions with a height difference, and prolonging the service life and improving the reliability of the battery cell.

In some embodiments, the electrode sheet has a thinned electrode sheet region, and the buffer member covers at least a portion of the thinned electrode sheet region. In the above technical solution, deformation of the buffer member alleviates to a certain extent stress concentration caused by the height difference at the thinned electrode sheet region, equalizing forces on the two portions with the height difference, and prolonging the service life and improving the reliability of the battery cell.

In some embodiments, the electrode assembly includes a flat region and a bent region connected to an end portion of the flat region, and the buffer member is arranged opposite at least one of the flat region and the bent region. In the above technical solution, the flat region is arranged opposite the buffer member, so that the buffer member can provide buffer for a region of the electrode assembly corresponding to the flat region; and a bent portion is arranged opposite the buffer member. A region of the buffer member facing the bent portion is basically in an arc shape, so that the buffer member can buffer a swelling force of the bent portion, reducing the risk of electrode fracture and lithium precipitation in the electrode assembly.

In some embodiments, the end of the electrode sheet is located in the flat region, and the buffer member covers the end of the electrode sheet along the stacking direction of the electrode sheet and the separator. In the above technical solution, stress concentration caused by the end of the electrode sheet with a certain thickness protruding from another portion is alleviated to a certain extent, equalizing forces on the two portions with a height difference, and prolonging the service life and improving the reliability of the battery cell.

In some embodiments, the electrode assembly includes a flat region and a bent region connected to an end portion of the flat region; and the end of the electrode sheet is located in the bent region, and the buffer member is offset from the end of the electrode sheet. In the above technical solution, a dimension of the buffer member can be reduced. This reduces manufacturing costs while the probability of stress concentration caused by swelling of the electrode assembly is reduced, and mounting of the buffer member is facilitated.

In some embodiments, the electrode assembly includes the flat region and the bent region connected to the end portion of the flat region; and along a stacking direction of the buffer member and the electrode assembly, an area of a projection of the buffer member on the casing is S3, and an area of a projection of a positive electrode active material region of the flat region on the casing is S4, where 0.3≤S3/S4≤1.1, preferably 0.5≤S3/S4≤0.9. In the above technical solution, the arrangement of the buffer member can reduce the probability of stress concentration caused by swelling of the electrode assembly, while the buffer member can be conveniently mounted and does not occupy excessive space, improving the reliability of the battery cell.

In some embodiments, a thickness of the buffer member is H1, where 0.5 mm≤H1≤10 mm. In the above technical solution, excessive reduction in the volumetric energy density of the battery cell can be prevented, and the probability of stress concentration caused by swelling of the electrode assembly can be reduced, prolonging the service life and improving the reliability of the battery cell.

In some embodiments, the compression rate of the buffer member under 1 MPa is L1, where L1≥50%, preferably L1≥60%. In the above technical solution, the buffer member can be compressed and deformed with the swelling of the electrode assembly, and absorb swelling of the electrode assembly, reducing the probability of stress concentration.

In some embodiments, the buffer member is a porous material member. In the above technical solution, using such a porous foam material member can reduce manufacturing costs while improving compressibility of the buffer member.

In some embodiments, a material of the buffer member includes at least one of polyvinyl chloride, polyethylene-vinyl acetate, polyethylene, polypropylene, polyurethane, polymethacrylimide, polyimide, polystyrene, and modified silicone rubber. In the above technical solution, a type of a main material of the buffer member is controlled, so that the material exhibits good electrolyte corrosion resistance, compressibility, and resilience, ensuring reliability over the full life cycle of the battery cell.

In a second aspect, this application provides a battery, including the battery cell in the above embodiments.

In a third aspect, this application provides an electric device, including the battery in the above embodiments, where the battery is configured to provide electrical energy.

The above description is only an overview of the technical solutions of this application. To more clearly understand the technical means of this application, implementation can be carried out in accordance with the content of the specification, and to make the above and other objects, features, and advantages of this application more obvious and understandable, specific embodiments of this application are particularly cited below.

### BRIEF DESCRIPTION OF DRAWINGS

By reading the detailed description of the preferred embodiments below, various other advantages and benefits will become clear to those of ordinary skill in the art. The drawings are only for the purpose of illustrating the preferred embodiments and are not considered as limitations to this application. Moreover, throughout the drawings, the same reference signs denote the same components. In the drawings:
FIG. 1 is a schematic diagram of an electric device in the related art;
FIG. 2 is a schematic diagram of a battery in the related art;
FIG. 3 is a schematic diagram of a battery cell in the related art;
FIG. 4 is a schematic diagram of a part of a battery cell according to some embodiments of this application, where an end of an electrode sheet forms a winding end;
FIG. 5 is a schematic diagram of a part of a battery cell according to other embodiments of this application, where an end of an electrode sheet forms a winding end;
FIG. 6 is a schematic diagram of a part of a battery cell according to still other embodiments of this application, where an end of an electrode sheet forms a winding end;
FIG. 7 is a schematic diagram of a part of a battery cell according to yet other embodiments of this application, where an end of an electrode sheet forms a winding end;
FIG. 8 is a schematic diagram of winding of the structure shown in FIG. 7 according to some embodiments of this application;
FIG. 9 is a schematic diagram of winding of the structure shown in FIG. 7 according to other embodiments of this application;
FIG. 10 is a schematic diagram of a part of a battery cell according to some embodiments of this application;
FIG. 11 is a schematic diagram of winding of the structure shown in FIG. 10 according to some embodiments of this application, where an end of a separator forms a winding end;
FIG. 12 is a schematic diagram of winding of the structure shown in FIG. 10 according to other embodiments of this application, where an end of a separator forms a winding end;
FIG. 13 is a schematic diagram of winding of the structure shown in FIG. 10 according to still other embodiments of this application, where an end of an electrode sheet forms a winding end; and
FIG. 14 to FIG. 16 are cross-sectional views of a battery cell according to some embodiments of this application.

Reference signs:
battery 1000; electric device 2000;
battery cell 100;
casing 10; casing body 11; end cover 12;
electrode assembly 20; winding end 20a; flat region 201; bent region 202; electrode sheet 21; end of an electrode sheet 211; separator 22; end of a separator 221; termination tape 23; first tape segment 231; second tape segment 232; and
buffer member 30.

### DETAILED DESCRIPTION OF EMBODIMENTS

In order to make the objects, technical solutions, and advantages of the embodiments of this application clearer, the technical solutions in the embodiments of this application will be clearly described below with reference to the drawings in the embodiments of this application. It is clear that the described embodiments are some but not all embodiments of this application. Based on the embodiments in this application, all other embodiments obtained by those of ordinary skill in the art without creative efforts fall within the protection scope of this application.

Unless otherwise defined, all technical and scientific terms used in this application have the same meaning as commonly understood by those skilled in the technical field to which this application pertains; the terms used in the specification of this application are only for the purpose of describing specific embodiments and are not intended to limit this application; the terms "include" and "have" in the specification and claims of this application and the above drawings, as well as any variations thereof, are intended to cover non-exclusive inclusion. The terms "first", "second", and the like in the specification and claims of this application or the above drawings are used to distinguish different objects, rather than to describe a specific order or primary-secondary relationship.

In this application, reference to "an embodiment" means that a specific feature, structure, or characteristic described with reference to the embodiment may be included in at least one embodiment of this application. The appearance of the phrase in various places in the specification does not necessarily refer to the same embodiment, nor is it an independent or alternative embodiment mutually exclusive with other embodiments.

In the description of this application, it should be noted that, unless otherwise explicitly specified and limited, the terms "mount", "connect", "join", and "attach" should be understood in a broad sense, for example, it may refer to a fixed connection, a detachable connection, or an integral connection; or may refer to a direct connection, an indirect connection through an intermediate medium, or internal communication between two elements. For those of ordinary skill in the art, the specific meanings of the above terms in this application can be understood according to specific circumstances.

In this application, the term "and/or" is merely a description of an association relationship of associated objects, indicating that three relationships can exist, for example, A and/or B can indicate: A alone exists, A and B exist simultaneously, and B alone exists. In addition, the character "/" in this application generally indicates that the associated objects before and after are in an "or" relationship.

In the embodiments of this application, the same reference signs denote the same components, and for brevity, detailed descriptions of the same components are omitted in different embodiments. It should be understood that the thicknesses, lengths, widths, and other dimensions of various components in the embodiments of this application shown in the drawings, as well as the overall thickness, length, width, and other dimensions of an integrated device, are only exemplary illustrations and should not constitute any limitation on this application.

The appearance of "a plurality of" in this application refers to two or more (including two).

In this application, a battery refers to a single physical module including one or more battery cells to provide higher voltage and capacity. For example, the battery mentioned in this application may include a battery module, a battery pack, or the like. Some batteries may include a box body for encapsulating one or more battery cells or a plurality of battery modules. The box body can prevent liquid or other foreign matter from affecting charge or discharge of the battery cells. Certainly, some batteries may not include the above box body and are directly disposed in a battery mounting compartment of an electric device.

In this application, a battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, rectangular, or the like, which is also not limited in the embodiments of this application. Battery cells are generally classified into three types based on encapsulation methods: cylindrical battery cell, prismatic battery cell, and pouch battery cell. This is also not limited in the embodiments of this application.

For example, a battery cell may include a casing, an electrode assembly, and an electrolyte. The casing is used to accommodate the electrode assembly and the electrolyte. The electrode assembly is formed by a positive electrode sheet, a negative electrode sheet, and a separator. The battery cell mainly operates based on metal ion movement between the positive electrode sheet and the negative electrode sheet. The positive electrode sheet includes a positive electrode current collector and a positive electrode active material layer. The positive electrode active material layer is applied to a surface of the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, a material of the positive electrode current collector may be aluminum, and the positive electrode active material may be lithium cobaltate, lithium iron phosphate, ternary lithium, lithium manganate, or the like.

The negative electrode sheet includes a negative electrode current collector, or the negative electrode sheet includes a negative electrode current collector and a negative electrode active material layer. The negative electrode active material layer is applied to a surface of the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. A material of the negative electrode current collector may be copper, and the negative electrode active material may be carbon, silicon, or the like. To ensure that no fusing occurs under high current, a plurality of positive electrode tabs are stacked together, and a plurality of negative electrode tabs are stacked together.

A material of the separator may be PP (polypropylene, polypropylene), PE (polyethylene, polyethylene), or the like. In addition, the electrode assembly may be a wound structure or a stacked structure, which is not limited in the embodiments of this application.

The battery cell may be provided with a pole or the like connected to the tab, serving as an electrical connection portion of the battery cell. Moreover, the battery cell may be provided with a pressure relief portion, and when internal pressure of the battery cell is excessive (for example, thermal runaway), the pressure relief portion is used to release substances inside the battery cell (for example, gas, liquid, particles, and the like), to reduce the internal pressure of the battery cell and avoid dangers such as explosion and combustion of the battery cell due to excessively rapid pressurization inside the battery cell. For example, the pressure relief portion may be an explosion-proof valve or an explosion-proof sheet.

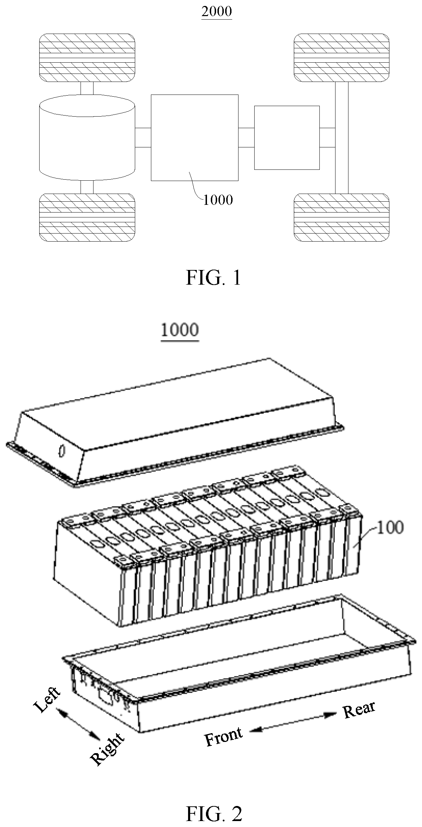

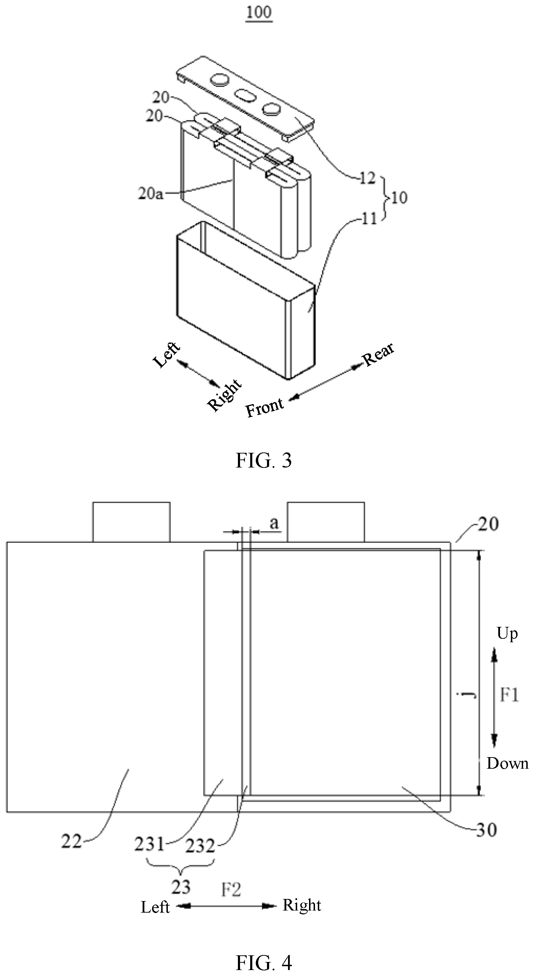

For example, as shown in FIG. 1 and FIG. 2, in some electric devices 2000, a battery 1000 is used for power supply, the battery 1000 includes a box body and a battery cell 100, and the box body includes an upper shell and a lower shell. As shown in FIG. 3, the battery cell 100 includes an electrode assembly 20 and a casing 10, and the casing 10 includes a casing body 11 and an end cover 12. In the conventional art, in some wound batteries, after the electrode assembly 20 is wound, an end is formed, and the end has a certain thickness. A height difference is formed between the end and another position. During the charge and discharge of the battery cell 100, the electrode assembly 20 swells. The end contacting the adjacent electrode assembly 20 or the casing 10 may cause stress concentration, uneven stress, and other problems on the adjacent electrode assembly 20 or the casing 10, affecting reliability and a service life of the battery cell 100.

In view of this, this application proposes a battery cell 100, including a casing 10, an electrode assembly 20 disposed in the casing 10, and a buffer member 30. The electrode assembly 20 includes an electrode sheet 21 and a separator 22. The electrode sheet 21 and the separator 22 are stacked and then wound to form the electrode assembly 20. The electrode assembly 20 is provided with a winding end 20a along a winding direction of the electrode assembly 20. The buffer member 30 is disposed in the casing 10. The buffer member 30 covers at least a portion of the winding end 20a along a stacking direction of the electrode sheet 21 and the separator 22.

In the battery cell 100 of the above structure, with the buffer member 30 provided at the winding end 20a, the buffer member 30 can cover at least a portion of the winding end 20a, and the buffer member 30 can space the winding end 20a of the electrode assembly 20 from an adjacent structure. When the electrode assembly 20 swells, the buffer member 30 deforms, thereby alleviating to a certain extent stress concentration caused by the winding end 20a protruding from another portion, equalizing forces on the two portions with a height difference, and improving the reliability and prolonging the service life of the battery cell 100.

The battery 1000 having the battery cell 100 disclosed in the embodiments of this application can be used in, but not limited to, an electric device 2000 such as a vehicle, ship, or aircraft. The battery 1000 and the like disclosed in this application may form a power supply system of the electric device 2000, to ensure the safety and reliability in use of the electric device 2000.

For example, the electric device 2000 disclosed in the embodiments of this application may be, but is not limited to, a vehicle, a mobile phone, a tablet, a laptop, a ship, a spacecraft, an electric toy, an electric tool, or the like. The vehicle may be a fuel vehicle, a gas vehicle, a new energy vehicle, or a rail vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a fixed or mobile electric toy, for example, a game console, an electric vehicle toy, an electric ship toy, an electric airplane toy, and the like; the electric tool includes a metal cutting electric tool, a grinding electric tool, an assembly electric tool, and a railway electric tool, for example, an electric drill, an electric grinder, an electric wrench, an electric screwdriver, an electric hammer, an impact drill, a concrete vibrator, an electric planer, and the like.

With reference to the drawings, the battery cell 100 according to the embodiments of this application is described below.

As shown in FIG. 4 to FIG. 16, FIG. 4 to FIG. 16 are structural diagrams of battery cells 100 in a plurality of embodiments. The battery cell 100 according to the embodiments of this application includes a casing 10, an electrode assembly 20, and a buffer member 30. The electrode assembly 20 is disposed in the casing 10. The electrode assembly 20 includes an electrode sheet 21 and a separator 22. The electrode sheet 21 and the separator 22 are stacked and then wound to form the electrode assembly 20. The electrode assembly 20 is provided with a winding end 20a along a winding direction of the electrode assembly 20. The buffer member 30 is disposed in the casing 10. The buffer member 30 covers at least a portion of the winding end 20a along a stacking direction of the electrode sheet 21 and the separator 22.

The casing 10 refers to an outermost structure of the battery cell 100, and the casing 10 accommodates the electrode assembly 20, the electrolyte, and the like.

The electrode assembly 20 includes the wound electrode sheet 21 and separator 22. The electrode sheet 21 includes a positive electrode sheet and a negative electrode sheet, where the positive electrode sheet includes a positive electrode current collector and a positive electrode active material layer, and the negative electrode sheet may include a negative electrode current collector, or the negative electrode sheet includes a negative electrode current collector and a negative electrode active material layer.

The electrode sheet 21 and the separator 22 are stacked and then wound around a winding axis to form the electrode assembly 20. In the winding direction, the electrode assembly 20 is provided with the winding end 20a, where the winding end 20a may be an end 211 of the electrode sheet 21, or may be an end 221 of the separator 22. In some examples, the electrode assembly 20 further includes a termination tape 23; the termination tape 23 is provided at the end 211 of the electrode sheet 21 or the end 221 of the separator 22 for fastening the electrode sheet 21 and the separator 22; and the termination tape 23 may cover an outer side of the end 211 of the electrode sheet 21 or the end 221 of the separator 22, or may be provided on a side of the separator 22 or the end 211 of the electrode sheet 21 facing toward a center of the electrode assembly 20, and in this case, the winding end 20a may alternatively be an end of the termination tape 23. The winding end 20a may be arranged opposite the casing 10, or may be arranged opposite another electrode assembly 20, that is, the winding end 20a is provided with an adjacent structure.

The buffer member 30 is disposed in the casing 10. The buffer member 30 may cover the winding end 20a, and the buffer member 30 is configured to provide buffer for the winding end 20a of the electrode assembly 20, preventing stress concentration caused by squeezing between the swelling electrode assembly 20 and the casing 10 or an adjacent electrode assembly 20. Specifically, the buffer member 30 may provide a buffer space for swelling of the electrode assembly 20. For example, the buffer member 30 can be elastically deformed, and when the electrode assembly 20 swells, the buffer member 30 can adaptively contract to provide a buffer space for the electrode assembly 20. For another example, a buffer space is provided on the buffer member 30, and when the electrode assembly 20 swells, a swelling portion can be accommodated by the buffer space.

The stacking direction of the electrode sheet 21 and the separator 22 is perpendicular to an outer surface of the electrode assembly 20. The buffer member 30 covers at least a portion of the winding end 20a. The buffer member 30 is provided on an outer side of the outer surface of the electrode assembly 20, and the buffer member 30 can space the winding end 20a from an adjacent electrode assembly 20 or the casing 10. When the electrode assembly 20 swells, the buffer member 30 deforms, thereby alleviating to a certain extent stress concentration caused by the winding end 20a protruding from other portions, equalizing forces on the two portions with a height difference, and prolonging the service life and improving the reliability of the battery cell 100.

In addition, during charge and discharge of the battery cell 100, the buffer member 30 supports the winding end 20a of the electrode assembly 20 to a certain extent, which can reduce deformation of the winding end 20a, thereby improving wrinkling of the electrode sheet 21 caused by swelling of the electrode assembly 20, and alleviating lithium or sodium precipitation during cycling of the battery cell 100.

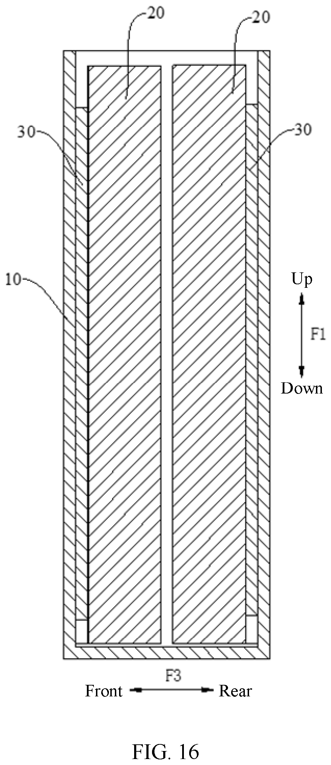

As shown in FIG. 16, the buffer member 30 may be located between an electrode assembly 20 and the casing 10, an end of the electrode assembly 20 is located between the electrode assembly 20 and the casing 10, the buffer member 30 can provide support and buffer for the electrode assembly 20 and space the electrode assembly 20 from the casing 10, so that the swelling electrode assembly 20 is not prone to squeeze the casing 10.

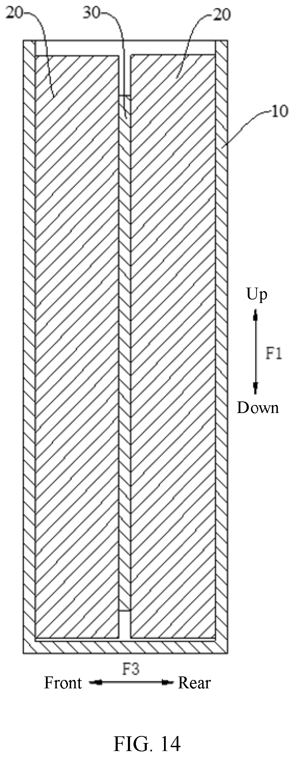

Alternatively, as shown in FIG. 14, the buffer member 30 may be located between two adjacent electrode assemblies 20, the plurality of electrode assemblies 20 are arranged along a front-rear direction, a winding end 20a of at least one electrode assembly 20 is located between two electrode assemblies 20, the buffer member 30 is provided between two adjacent electrode assemblies 20, and the buffer member 30 can provide support and buffer for the electrode assembly 20 and space the adjacent electrode assemblies 20, so that the swelling electrode assemblies 20 are not prone to squeeze each other.

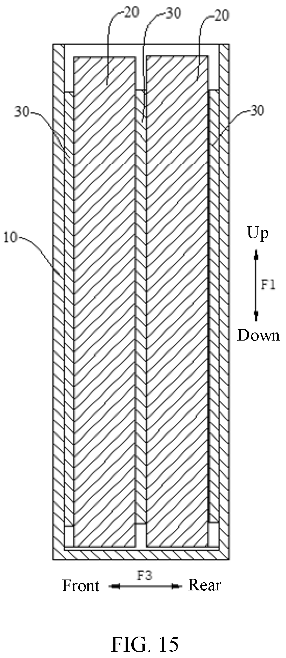

Certainly, the buffer member 30 may alternatively be partially provided between the electrode assembly 20 and the casing 10 and partially provided between adjacent electrode assemblies 20 as shown in FIG. 15, which is also within the protection scope of this application. It should be noted that the buffer member 30 provided between the electrode assembly 20 and the casing 10 and the buffer member 30 provided between adjacent electrode assemblies 20 may be different portions of the same buffer member 30, or may be independent different buffer members 30.

In the technical solution of this application, with the buffer member 30 provided at the winding end 20a, the buffer member 30 can cover at least a portion of the winding end 20a, and the buffer member 30 can space the winding end 20a of the electrode assembly 20 from an adjacent structure. When the electrode assembly 20 swells, the buffer member 30 deforms, thereby alleviating to a certain extent stress concentration caused by the winding end 20a protruding from other portions, equalizing forces on the two portions with a height difference, and improving the reliability and prolonging the service life of the battery cell 100.

As shown in FIG. 4 to FIG. 9, along the winding direction of the electrode assembly 20, an end of the electrode assembly 20 is provided with a termination tape 23, and an end of the termination tape 23 along the winding direction forms the winding end 20a.

As shown in FIG. 4 to FIG. 9, the electrode assembly 20 is wound in a clockwise direction. A termination tape 23 is provided at the winding end 20a. The termination tape 23 is provided at the end 211 of the electrode sheet 21 or the end 221 of the separator 22. The termination tape 23 is used to fasten the electrode sheet 21 and the separator 22. The termination tape 23 can stabilize the overall structure of the electrode assembly 20, reduce the probability of displacement and deformation, reduce wrinkling of the electrode sheet 21, reduce the probability of internal short circuits, and the like. The termination tape 23 may cover an outer side of the end 211 of the electrode sheet 21 or the end 221 of the separator 22, or may be provided on a side of the separator 22 or the end 211 of the electrode sheet 21 facing toward the center of the electrode assembly 20. Specifically, the termination tape 23 may be sandwiched between the end 221 of the separator 22 and another portion of the separator 22; or the termination tape 23 may be sandwiched between the end 221 of the separator 22 and the electrode sheet 21; or the termination tape 23 may be sandwiched between the end 211 of the electrode sheet 21 and another portion of the electrode sheet 21; or the termination tape 23 may be sandwiched between the end 211 of the electrode sheet 21 and the separator 22.

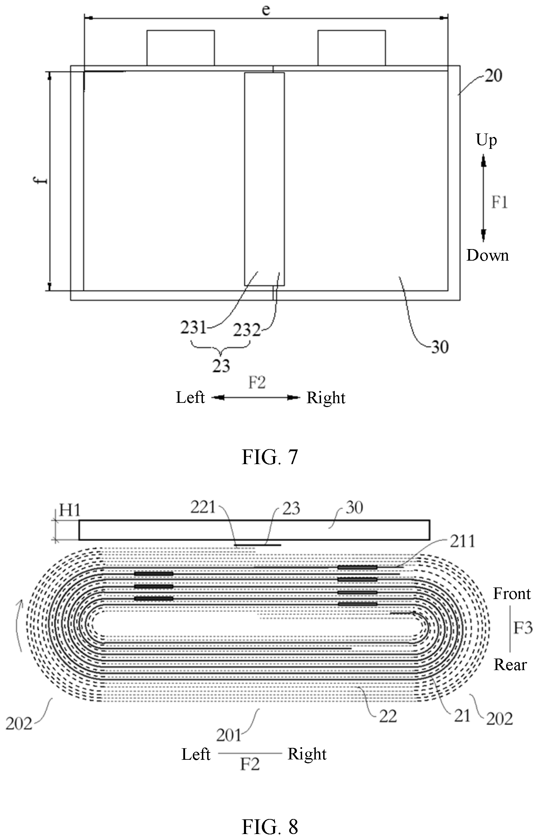

The termination tape 23 has a certain thickness, and the thickness of the termination tape 23 is, for example, a dimension of the termination tape 23 in a third direction (a front-rear direction as shown in FIG. 8). As shown in FIG. 8, in the third direction, the termination tape 23 protrudes from the separator 22, and the termination tape 23 and the separator 22 have a height difference.

Along the stacking direction of the electrode sheet 21 and the separator 22, the buffer member 30 covers at least a portion of the termination tape 23. The buffer member 30 can space the termination tape 23 from an adjacent electrode assembly 20 or the casing 10. When the electrode assembly 20 swells, the buffer member 30 deforms, thereby alleviating to a certain extent stress concentration caused by the termination tape 23 protruding from the separator 22 or the electrode sheet 21, equalizing forces on the two portions with a height difference, and prolonging the service life and improving the reliability of the battery cell 100.

As shown in FIG. 4, in some embodiments, the termination tape 23 includes a first tape segment 231 and a second tape segment 232, the first tape segment 231 covers the end 221 of the separator 22 or the end 211 of the electrode sheet 21, the second tape segment 232 is located on one side of the first tape segment 231, and the buffer member 30 covers at least a portion of the second tape segment 232.

As shown in FIG. 4, the first tape segment 231 of the termination tape 23 covers the end 221 of the separator 22, the first tape segment 231 is bonded to the end 221 of the separator 22, the second tape segment 232 extends beyond the end 221 of the separator 22, the second tape segment 232 may be bonded to the electrode sheet 21 or a portion of the separator 22, the second tape segment 232 protrudes from the separator 22 or the electrode sheet 21, a position corresponding to the second tape segment 232 is prone to stress concentration, the buffer member 30 covers the second tape segment 232 or a portion of the second tape segment 232, and the buffer member 30 absorbs swelling stress through deformation, thereby alleviating to a certain extent stress concentration caused by the second tape segment 232 protruding from the separator 22 or the electrode sheet 21, equalizing forces on the two portions with a height difference, and prolonging the service life and improving the reliability of the battery cell 100.

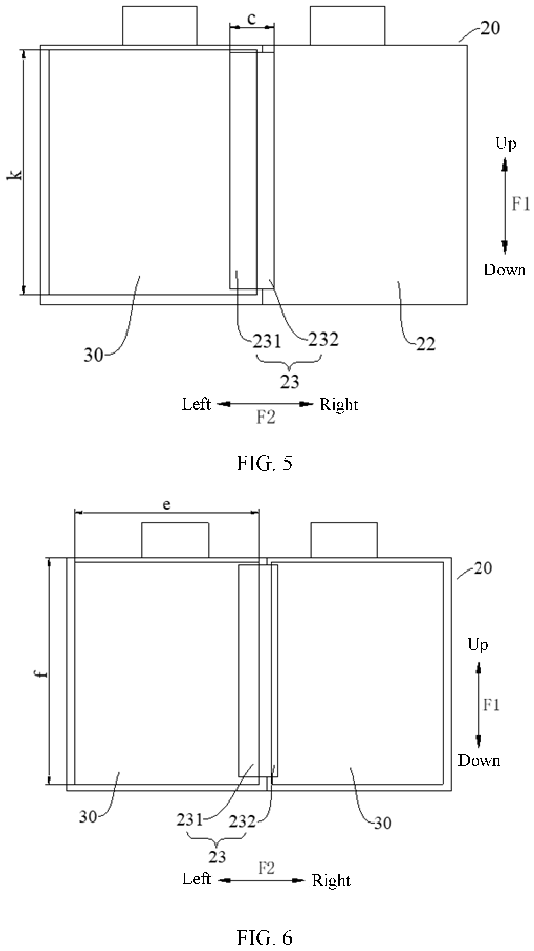

As shown in FIG. 5, in some embodiments, the termination tape 23 includes a first tape segment 231 and a second tape segment 232, the first tape segment 231 covers the end 221 of the separator 22 or the end 211 of the electrode sheet 21, the second tape segment 232 is located on one side of the first tape segment 231, and the buffer member 30 covers at least a portion of the first tape segment 231.

As shown in FIG. 5, the first tape segment 231 of the termination tape 23 covers the end 221 of the separator 22, the first tape segment 231 is bonded to the end 221 of the separator 22, the second tape segment 232 extends beyond the end 221 of the separator 22, the second tape segment 232 may be bonded to a portion of the separator 22 or the electrode sheet 21, the first tape segment 231 protrudes from the separator 22, the third direction is a height direction of the electrode assembly 20, and a height of the electrode assembly 20 at a position of the first tape segment 231 is greater than a height at a position of the second tape segment 232.

The buffer member 30 covers the first tape segment 231 or a portion of the first tape segment 231, and the buffer member 30 absorbs swelling stress through deformation, thereby alleviating to a certain extent stress concentration caused by the first tape segment 231 protruding from the separator 22 or the electrode sheet 21, equalizing forces on the two portions with a height difference; and since the first tape segment 231 is higher than the second tape segment 232, under the action of the buffer member 30, the second tape segment 232 can also be spaced from an adjacent structure, which can also alleviate stress concentration caused by the second tape segment 232 with a certain thickness protruding from the separator or the electrode sheet, prolonging the service life and improving the reliability of the battery cell 100.

As shown in FIG. 6 and FIG. 7, in some embodiments, the buffer member 30 covers at least a portion of the first tape segment 231, and the buffer member 30 covers at least a portion of the second tape segment 232. As shown in FIG. 6, the buffer member 30 covers a portion of the first tape segment 231, and the buffer member 30 covers a portion of the second tape segment 232, where the buffer member 30 may be two independent buffer members 30. As shown in FIG. 7, a portion of the buffer member 30 covers the first tape segment 231, and another portion of the buffer member 30 covers the second tape segment 232. Different portions of the same buffer member 30 correspond to the two tape segments respectively. By covering at least a portion of the first tape segment 231 and at least a portion of the second tape segment 232 with the buffer member 30, the buffer member 30 absorbs swelling stress through deformation, equalizing forces on the two portions with a height difference, and prolonging the service life and improving the reliability of the battery cell 100.

As shown in FIG. 4 to FIG. 7, in some examples, the electrode sheet 21 and the separator 22 are wound around a winding axis; the termination tape 23 has opposite first end portion and second end portion in an extension direction of the winding axis; and the buffer member 23 covers the first end portion and/or the second end portion.

As shown in FIG. 4 to FIG. 7, the winding axis extends along a first direction (an up-down direction as shown in FIG. 4); in the first direction, the termination tape 23 has a first end portion and a second end portion, and the buffer member 23 covers at least one end portion, thereby alleviating to a certain extent stress concentration caused by the first end portion or the second end portion protruding from the separator 22 or the electrode sheet 21, equalizing forces on the two portions with a height difference, and prolonging the service life and improving the reliability of the battery cell 100.

In some examples, in the extension direction of the winding axis, a length dimension of the buffer member 30 is not less than a length dimension of the termination tape 23.

As shown in FIG. 4 to FIG. 7, the winding axis extends along a first direction (an up-down direction as shown in FIG. 4); and a length of the buffer member 30 in the first direction is greater than a length of the termination tape 23. In this case, the buffer member 30 can cover an end portion of the termination tape 23 in the first direction, thereby alleviating to a certain extent stress concentration caused by the end portion of the termination tape 23 protruding from the separator 22 or the electrode sheet 21, equalizing forces on the two portions with a height difference, and prolonging the service life and improving the reliability of the battery cell 100.

In some embodiments, a ratio of compression rates of the buffer member 30 to the termination tape 23 under 1 MPa is L1/L2, where 5≤L1/L2≤30, preferably 10≤L1/L2≤20.

The buffer member 30 is compressible, that is, it can be compressed and deformed when subjected to an external force to reduce occupied space; and when the external force is removed, it can at least partially recover to provide stable support to the electrode assembly 20. The compression rate of the buffer member 30 refers to a ratio of a volume of the buffer member 30 reduced when the buffer member 30 is compressed to a volume of the buffer member 30 in a natural state.

Under 1 MPa, if the ratio of the compression rates of the buffer member 30 to the termination tape 23 is excessively small, the compression rates of the buffer member 30 and the termination tape 23 are close, and then the buffer provided by the buffer member 30 is not obvious, and stress concentration is prone to occur when the electrode assembly 20 swells; and if the ratio of the compression rates of the buffer member 30 to the termination tape 23 is excessively large, the buffer member 30 has an excessively large compression rate and can hardly provide effective support, and the winding end 20a is prone to wrinkling, deformation, and the like.

In this case, L1/L2 may be limited to 5 to 30, and L1/L2 may be any value from 5, 6, 7, 8, 9, 10, 11, 12, 13, 14, 15, 16, 17, 18, 19, 20, 21, 22, 23, 24, 25, 26, 27, 28, 29, and 30, or a range defined by any two of these values.

In this way, the buffer member 30 can space the termination tape 23 from an adjacent structure, and can effectively deform when the electrode assembly 20 swells, thereby providing buffer, equalizing forces on the two portions with a height difference, reducing the probability of stress concentration caused by swelling of the electrode assembly 20; in addition, the buffer member 30 can provide effective support, reducing the probability of wrinkling and deformation, and prolonging the service life and improving the reliability of the battery cell 100.

In some embodiments, 10≤L1/L2≤20, and L1/L2 may be any value from 10, 10.5, 11, 11.5, 12, 12.5, 13, 13.5, 14, 14.5, 15, 15.5, 16, 16.5, 17, 17.5, 18, 18.5, 19, 19.5, and 20, or a range defined by any two of these values.

In this way, the buffer member 30 can space the termination tape 23 from an adjacent structure, and can effectively deform when the electrode assembly 20 swells, thereby providing buffer, equalizing forces on the two portions with a height difference, reducing the probability of stress concentration caused by swelling of the electrode assembly 20; in addition, the buffer member 30 can provide effective support, reducing the probability of wrinkling and deformation, and prolonging the service life and improving the reliability of the battery cell 100.

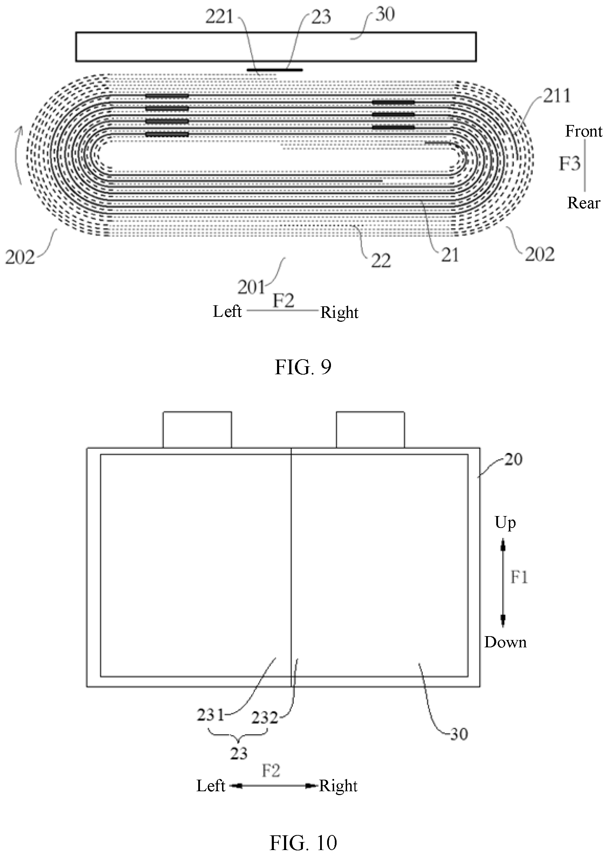

As shown in FIG. 8 and FIG. 9, in some embodiments, a thickness ratio of the buffer member 30 to the termination tape 23 is H1/H2, where 10≤H1/H2≤100, preferably 10≤H1/H2≤20.

As shown in FIG. 8 and FIG. 9, in some examples, in the third direction, a thickness of the buffer member 30 is H1, where the thickness of the buffer member 30 is the thickness of the buffer member 30 in a free state; and a thickness of the termination tape 23 is H2. If H1/H2 is excessively large, H1 is excessively large, meaning that the buffer member 30 is excessively thick. In this case, a space occupied by the buffer member 30 in the third direction is excessive, and a space occupied by the corresponding electrode assembly 20 in the third direction is reduced, leading to a reduction in the volumetric energy density of the battery cell 100. If H1/H2 is excessively small, H1 is excessively small, meaning that the buffer member 30 is excessively thin. In this case, a deformable space of the buffer member 30 is excessively small, and therefore stress concentration is prone to occur at the termination tape 23 when the electrode assembly 20 swells.

Therefore, H1/H2 is limited to 10 to 100, and H1/H2 may be any value from 10, 15, 20, 25, 30, 35, 40, 45, 50, 55, 60, 65, 70, 75, 80, 85, 90, 95, and 100, or a range defined by any two of these values.

In this way, excessive reduction in the volumetric energy density of the battery cell 100 can be prevented, and the probability of stress concentration caused by swelling of the electrode assembly 20 can be reduced, prolonging the service life and improving the reliability of the battery cell 100.

In some embodiments, 10≤H1/H2≤20, and H1/H2 can be any value from 10, 11, 12, 13, 14, 15, 16, 17, 18, 19, and 20, or a range defined by any two of these values.

In this way, excessive reduction in the volumetric energy density of the battery cell 100 can be further prevented, and the probability of stress concentration caused by swelling of the electrode assembly 20 can be reduced, prolonging the service life and improving the reliability of the battery cell 100.

As shown in FIG. 4 to FIG. 9, in some embodiments, a ratio of an area of a portion of the buffer member 30 covering the termination tape 23 to an area of the termination tape 23 is S1/S2, where 0.1≤S1/S2≤1, preferably 0.8≤S1/S2≤1.

As shown in FIG. 4 and FIG. 5, the buffer member 30 covers at least a portion of the termination tape 23. A dimension of the portion of the buffer member 30 covering the termination tape 23 in the second direction (a left-right direction as shown in FIG. 4) is a, a dimension of the portion of the buffer member 30 covering the termination tape 23 in the first direction is j, an area S1 is a*j, a dimension of the termination tape 23 in the first direction is c, a dimension of the termination tape 23 in the first direction is k, and an area S2 is c*k.

When S1/S2 is excessively small, the portion of the buffer member 30 covering the termination tape 23 is excessively small, and when the electrode assembly 20 swells, stress concentration is prone to occur at the termination tape 23.

In this case, S1/S2 may be limited to 0.1 to 1, and S1/S2 may be any value from 0.1, 0.2, 0.3, 0.4, 0.5, 0.6, 0.7, 0.8, 0.9, and 1, or a range defined by any two of these values. When S1/S2 is 1, the buffer member 30 can completely cover the termination tape 23.

S1/S2 is limited, so that the buffer member 30 can effectively cover the termination tape 23, thereby reducing the possibility of stress concentration caused by the termination tape 23 protruding from the separator 22 or the electrode sheet 21, equalizing forces on the two portions with a height difference, and prolonging the service life and improving the reliability of the battery cell 100.

In some embodiments, 0.8≤S1/S2≤1, and S1/S2 may be any value from 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, and 1, or a range defined by any two of these values.

In this way, the buffer member 30 can cover more of the termination tape 23, thereby reducing the possibility of stress concentration caused by the termination tape 23 protruding from the separator 22 and the electrode sheet 21, equalizing forces on the two portions with a height difference, and prolonging the service life and improving the reliability of the battery cell 100.

As shown in FIG. 4 to FIG. 9, in some embodiments, along the stacking direction of the electrode sheet 21 and the separator 22, the buffer member 30 covers at least a portion of the separator 22 and/or at least a portion of the electrode sheet 21.

As shown in FIG. 8, in the third direction (a front-rear direction as shown in FIG. 8), the buffer member 30 covers at least a portion of the termination tape 23, and the buffer member 30 also covers a portion of the separator 22, thereby equalizing the two portions with a height difference, and prolonging the service life and improving the reliability of the battery cell 100.

In other examples, the buffer member 30 covers at least a portion of the termination tape 23, and the buffer member 30 also covers a portion of the electrode sheet 21; or the buffer member 30 covers at least a portion of the termination tape 23, and the buffer member 30 also covers a portion of the separator 22 and a portion of the electrode sheet 21, thereby equalizing the two portions with a height difference, and prolonging the service life and improving the reliability of the battery cell 100.

As shown in FIG. 10 to FIG. 12, in some embodiments, along the winding direction of the electrode assembly 20, the end 221 of the separator 22 forms the winding end 20a.

As shown in FIG. 10 to FIG. 12, the electrode assembly 20 is wound along a clockwise direction, and the winding end 20a is the separator 22, that is, the end 221 of the separator 22 forms the winding end 20a.

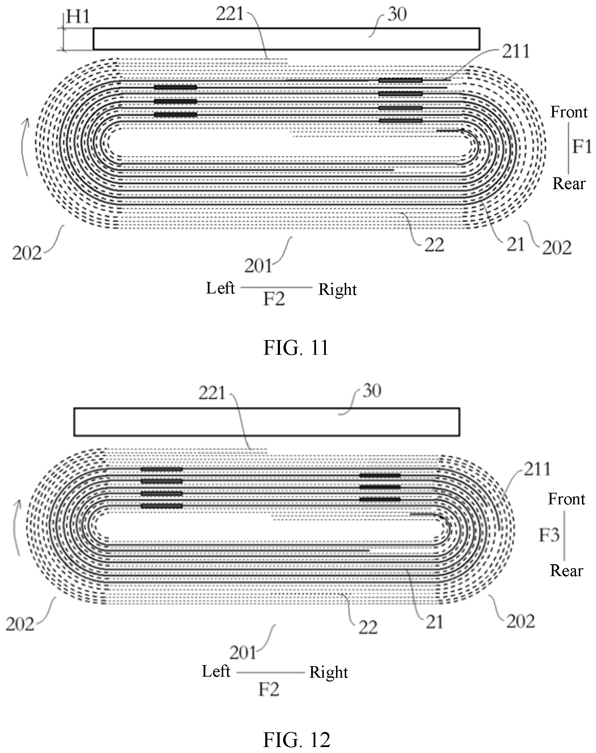

The separator 22 has a certain thickness, and the thickness of the separator 22 is, for example, a dimension of the separator 22 in the third direction (a front-rear direction as shown in FIG. 11). As shown in FIG. 11, in the third direction, the end 221 of the separator 22 protrudes from another portion of the separator 22, and the end of the separator 22 and the another portion of the separator 22 have a height difference.

Along the stacking direction of the electrode sheet 21 and the separator 22, the buffer member 30 covers at least a portion of the separator 22. The buffer member 30 can space the separator 22 from an adjacent electrode assembly 20 or the casing 10. When the electrode assembly 20 swells, the buffer member 30 deforms, thereby alleviating to a certain extent stress concentration caused by the end of the separator 22 with a certain thickness protruding from another portion, equalizing forces on the two portions with a height difference, and prolonging the service life and improving the reliability of the battery cell 100.

In some embodiments, a ratio of compression rates of the buffer member 30 to the separator 22 under 1 MPa is L1/L3, where 1≤L1/L3≤5, preferably 2≤L1/L3≤3.5.

Under 1 MPa, if the ratio of the compression rates of the buffer member 30 to the separator 22 is excessively small, the compression rates of the buffer member 30 and the separator 22 are close, and then the buffer provided by the buffer member 30 is not obvious, and stress concentration is prone to occur when the electrode assembly 20 swells; and if the ratio of the compression rates of the buffer member 30 to the separator 22 is excessively large, the buffer member 30 has an excessively large compression rate and can hardly provide effective support, and the winding end 20a is prone to wrinkling, deformation, and the like.

In this case, L1/L3 may be limited to 1 to 5, where L1/L3 may be any value from 1, 2, 3, 4, and 5, or a range defined by any two of these values.

In this way, the buffer member 30 can space the separator 22 from an adjacent structure, and can effectively deform when the electrode assembly 20 swells, thereby providing buffer, equalizing forces on the two portions with a height difference, reducing the probability of stress concentration caused by swelling of the electrode assembly 20; in addition, the buffer member 30 can provide effective support, reducing the probability of wrinkling and deformation, and prolonging the service life and improving the reliability of the battery cell 100.

In some embodiments, 2≤L1/L3≤3.5, where L1/L3 may be any value from 2, 2.1, 2.2, 2.3, 2.4, 2.5, 2.6, 2.7, 2.8, 2.9, 3, 3.1, 3.2, 3.3, 3.4, and 3.5, or a range defined by any two of these values.

In this case, the buffer member 30 can space the separator 22 from an adjacent structure, and can effectively deform when the electrode assembly 20 swells; the buffer member 30 can provide buffer, equalizing forces on the two portions with a height difference, reducing the probability of stress concentration caused by swelling of the electrode assembly 20; in addition, the buffer member 30 can provide effective support, reducing the probability of wrinkling and deformation, prolonging the service life and improving the reliability of the battery cell 100.

As shown in FIG. 11, in some embodiments, a thickness ratio of the buffer member 30 to the separator 22 is H1/H3, where 50≤H1/H3≤700.

As shown in FIG. 11, in some examples, a thickness of the buffer member 30 is H1, where the thickness of the buffer member 30 is a thickness of the buffer member 30 in a free state; and a thickness of each separator 22 is H3. If H1/H3 is excessively large, H1 is excessively large, meaning that the buffer member 30 is excessively thick. In this case, a space occupied by the buffer member 30 is excessive, and a space occupied by the corresponding electrode assembly 20 is reduced, leading to a reduction in the volumetric energy density of the battery cell 100. If H1/H3 is excessively small, H1 is excessively small, meaning that the buffer member 30 is excessively thin. In this case, a deformable space of the buffer member 30 is excessively small, and therefore stress concentration is prone to occur at the winding end 20a when the electrode assembly 20 swells.

In this case, H1/H3 is limited to 50 to 700, where H1/H3 may be any value from 50, 100, 150, 200, 250, 300, 350, 400, 450, 500, 550, 600, 650, and 700, or a range defined by any two of these values.

In this way, excessive reduction in the volumetric energy density of the battery cell 100 can be prevented, and the probability of stress concentration caused by swelling of the electrode assembly 20 can be reduced, prolonging the service life and improving the reliability of the battery cell 100.

In some embodiments, a side of the end 221 of the separator 22 facing toward a center of the electrode assembly 20 is provided with an adhesive material.

The end 221 of the separator 22 is provided with an adhesive material. The adhesive material may be directly formed on the end 221 of the separator 22. The adhesive material can exhibit its characteristics in a specific state, so that the end 221 of the separator 22 can be directly bonded to an adjacent separator 22 or electrode sheet 21, thereby fastening the electrode sheet 21 and the separator 22, stabilizing the overall structure of the electrode assembly 20, reducing the probability of displacement and deformation, reducing wrinkling of the electrode sheet 21, reducing the probability of internal short circuits, and the like.

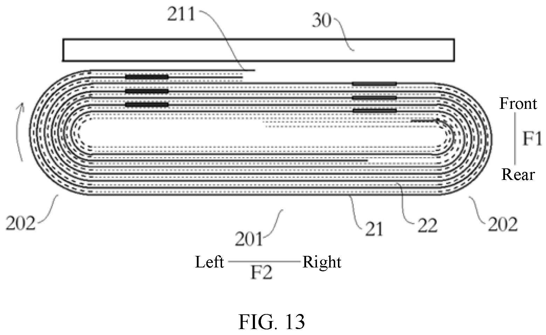

As shown in FIG. 13, in some embodiments, along the winding direction of the electrode assembly 20, the end 211 of the electrode sheet 21 forms the winding end 20a.

As shown in FIG. 13, the electrode assembly 20 is wound along a clockwise direction, the winding end 20a is the electrode sheet 21, that is, the end 211 of the electrode sheet 21 forms the winding end 20a.

The electrode sheet 21 has a certain thickness. The thickness of the electrode sheet 21 is, for example, a dimension of the electrode sheet 21 in the third direction (a front-rear direction as shown in FIG. 13). As shown in FIG. 13, in the third direction, the end 211 of the electrode sheet 21 protrudes from another portion of the electrode sheet 21, and the end 211 of the electrode sheet 21 and the electrode sheet 21 have a height difference.

Along the stacking direction of the electrode sheet 21 and the separator 22, the buffer member 30 covers at least a portion of the electrode sheet 21, and the buffer member 30 can space the electrode sheet 21 from an adjacent electrode assembly 20 or the casing 10. When the electrode assembly 20 swells, the buffer member 30 deforms, thereby alleviating to a certain extent stress concentration caused by the end 211 of the electrode sheet 21 with a certain thickness protruding from another portion, equalizing forces on the two portions with a height difference, and prolonging the service life and improving the reliability of the battery cell 100.

In some embodiments, the electrode sheet 21 has a thinned electrode sheet region, and the buffer member 30 covers at least a portion of the thinned electrode sheet region.

An end portion of the electrode sheet 21 has a thinned electrode sheet region. A thickness of the thinned electrode sheet region is less than a thickness of another position of the electrode sheet 21. In this case, a height difference is formed at a connection between the thinned electrode sheet region and the another position of the electrode sheet 21. The buffer member 30 covers the end 211 of the electrode sheet 21 and extends to the thinned electrode sheet region. Deformation of the buffer member 30 alleviates to a certain extent stress concentration caused by the height difference at the thinned electrode sheet region, equalizing forces on the two portions with the height difference, and prolonging the service life and improving the reliability of the battery cell 100.

As shown in FIG. 8, FIG. 9, and FIG. 11 to FIG. 13, in some embodiments, the electrode assembly 20 includes a flat region 201 and a bent region 202 connected to an end portion of the flat region 201, and the buffer member 30 is arranged opposite at least one of the flat region 201 and the bent region 202.

As shown in FIG. 8, after the electrode sheet 21 and the separator 22 are stacked and wound, the flat region 201 is formed. The flat region 201 refers to a portion features planar extension after winding. The bent region 202 refers to a portion features arc extension after winding. For example, as shown in FIG. 8, a portion between a front side surface and a rear side surface of the electrode assembly 20 serves as the flat region 201, and an extension direction of the electrode sheet 21 in the flat region 201 is a length direction of the flat region 201. Along a second direction as shown in FIG. 8, left and right end portions of the flat region 201 are the bent region 202.

The flat region 201 is arranged opposite the buffer member 30, so that the buffer member 30 can provide buffer for a region of the electrode assembly 20 corresponding to the flat region 201; and a bent portion is arranged opposite the buffer member 30. A region of the buffer member 30 facing the bent portion is basically in an arc shape, so that the buffer member 30 can buffer a swelling force of the bent portion, reducing the risk of electrode fracture and lithium precipitation in the electrode assembly 20.

As shown in FIG. 8 and FIG. 9, in some embodiments, the end 211 of the electrode sheet 21 is located in the flat region 201, and the buffer member 30 covers the end 211 of the electrode sheet 21 along the stacking direction of the electrode sheet 21 and the separator 22.

As shown in FIG. 8 and FIG. 9, the buffer member 30 covers at least a portion of the termination tape 23, and the buffer member 30 also covers a portion of the separator 22 and a portion of the electrode sheet 21, thereby alleviating to a certain extent stress concentration caused by the end of the electrode sheet 21 with a certain thickness protruding from another portion, equalizing forces on the two portions with a height difference, and prolonging the service life and improving the reliability of the battery cell 100.

As shown in FIG. 13, in some embodiments, the electrode assembly 20 includes the flat region 201 and the bent region 202 connected to an end portion of the flat region 201, the end 211 of the electrode sheet 21 is located in the bent region 202, and the buffer member 30 is offset from the end 211 of the electrode sheet 21.

As shown in FIG. 13, after the electrode sheet 21 and the separator 22 are stacked and wound, the flat region 201 is formed. The flat region 201 refers to a portion features planar extension after winding. The bent region 202 refers to a portion features arc extension after winding. For example, as shown in FIG. 13, a portion between a front side surface and a rear side surface of the electrode assembly 20 serves as the flat region 201, and an extension direction of the electrode sheet 21 in the flat region 201 is a length direction of the flat region 201. Along a second direction as shown in FIG. 13, left and right end portions of the flat region 201 are the bent region 202.

As shown in FIG. 13, the end 211 of the electrode sheet 21 is located in the bent region 202 on the right side. Since there is a certain gap between the bent region 202 and the adjacent electrode assembly 20 or the casing 10, there is a buffer space for swelling of the electrode assembly 20. A right end of the buffer member 30 is located on a left side of the end of the electrode sheet 21, so that the buffer member 30 is offset from the end 211 of the electrode sheet 21.

In this way, a dimension of the buffer member 30 can be reduced. This reduces manufacturing costs while the probability of stress concentration caused by swelling of the electrode assembly 20 is reduced, and mounting of the buffer member 30 is facilitated.

In some embodiments, the electrode assembly 20 includes the flat region 201 and the bent region 202 connected to the end portion of the flat region 201. Along a stacking direction of the buffer member 30 and the electrode assembly 20, an area of a projection of the buffer member 30 on the casing 10 is S3, and an area of a projection of a positive electrode active material region of the flat region 201 on the casing 10 is S4, where 0.3≤S3/S4≤1.1, preferably 0.5≤S3/S4≤0.9.

As shown in FIG. 8, after the electrode sheet 21 and the separator 22 are stacked and wound, the flat region 201 is formed. The flat region 201 refers to a portion features planar extension after winding. The bent region 202 refers to a portion features arc extension after winding. For example, as shown in FIG. 8, a portion between a front side surface and a rear side surface of the electrode assembly 20 serves as the flat region 201, and an extension direction of the electrode sheet 21 in the flat region 201 is a length direction of the flat region 201. Along a second direction as shown in FIG. 8, left and right end portions of the flat region 201 are the bent region 202, a length dimension of the flat region 201 in the second direction is B, B is a distance between corners on two sides of an innermost winding circle, a height dimension of a positive electrode active material layer in the flat region 201 in the first direction is D, an area of a projection of a positive electrode active material region of the flat region 201 on the casing 10 is S4, and S4=B*D.

As shown in FIG. 6, the buffer member 30 is projected on the casing 10, a length dimension in the second direction is e, a height dimension in the first direction is f, an area of a projection of the buffer member 30 on the casing 10 is S3, and S3=e*f.

If S3/S4 is excessively small, the portion of the buffer member 30 covering the flat region 201 is excessively small, and the electrode assembly 20 is still prone to squeeze an adjacent structure when the electrode assembly 20 swells, thereby causing stress concentration. If S3/S4 is excessively large, the buffer member 30 has an excessively large dimension. In this case, mounting of the buffer member 30 in the battery cell 100 is inconvenient, and the buffer member 30 occupies excessive space, easily affecting an exhaust space inside the battery cell 100.

In this case, S3/S4 is limited to 0.3 to 1.1, where S3/S4 may be any value from 0.3, 0.4, 0.5, 0.6, 0.7, 0.8, 0.9, 1, and 1.1, or a range defined by any two of these values.

In this way, the arrangement of the buffer member 30 can reduce the probability of stress concentration caused by swelling of the electrode assembly 20, while the buffer member 30 can be conveniently mounted and does not occupy excessive space, improving the reliability of the battery cell 100.

In some embodiments, 0.5≤S3/S4≤0.9, where S3/S4 may be any value from 0.5, 0.55, 0.6, 0.65, 0.7, 0.75, 0.8, 0.85, and 0.9, or a range defined by any two of these values.

In this way, the probability of stress concentration caused by swelling of the electrode assembly 20 can be further reduced, while the buffer member 30 can be conveniently mounted and does not occupy excessive space, improving the reliability of the battery cell 100.

In some embodiments, 0.6≤S3/S4≤0.85, where S3/S4 may be any value from 0.6, 0.66, 0.7, 0.76, 0.8, and 0.85, or a range defined by any two of these values.

In this way, the probability of stress concentration caused by swelling of the electrode assembly 20 can be further reduced, while the buffer member 30 can be conveniently mounted and does not occupy excessive space, improving the reliability of the battery cell 100.

As shown in FIG. 8, in some embodiments, a thickness of the buffer member 30 is H1, where 0.5 mm≤H1≤10 mm.

If H1 is excessively large, the space occupied by the buffer member 30 is excessive, and the space occupied by the corresponding electrode assembly 20 is reduced, leading to a reduction in the volumetric energy density of the battery cell 100. If H1 is excessively small, the deformable space of the buffer member 30 is small, and when the electrode assembly 20 swells, the winding end 20a squeezes an adjacent structure, easily leading to stress concentration.

The thickness H1 of the buffer member 30 is limited to 0.5 mm to 10 mm, and H1 may be any value from 0.5 mm, 1 mm, 2 mm, 3 mm, 4 mm, 5 mm, 6 mm, 7 mm, 8 mm, 9 mm, and 10 mm, or a range defined by any two of these values.

In this way, excessive reduction in the volumetric energy density of the battery cell 100 can be prevented, and the probability of stress concentration caused by swelling of the electrode assembly 20 can be reduced, prolonging the service life and improving the reliability of the battery cell 100.

In some embodiments, 1≤H1≤2.5 mm, where H1 may be any value from 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, and 2.5 mm, or a range defined by any two of these values. In this way, excessive reduction in the volumetric energy density of the battery cell 100 can be further prevented, and the probability of stress concentration caused by swelling of the electrode assembly 20 can be reduced, prolonging the service life and improving the reliability of the battery cell 100.

In some embodiments, the compression rate of the buffer member 30 under 1 MPa is L1, where L1≥50%, preferably L1≥60%.

When the compression rate of the buffer member 30 is excessively small, a compression amount of the buffer member 30 is small, hindering absorption of deformation of the electrode assembly 20; and a swelling force of the electrode assembly 20 is prone to act on an adjacent structure, leading to stress concentration. In this case, the compression rate L1 of the buffer member 30 under 1 MPa is greater than or equal to 50%, meaning that L1 may be 50%, 60%, 70%, 80%, or 90%. In this way, the buffer member 30 can be compressed and deformed with swelling of the electrode assembly 20, and absorb swelling of the electrode assembly 20, reducing the probability of stress concentration.

In some examples, L1≥60%, meaning that L1 may be 60%, 65%, 70%, 80%, or 90%, and more preferably L1≥80%, meaning that L1 may be 80%, 85%, 90%, or 95%. In this way, the buffer member 30 can be compressed and deformed with swelling of the electrode assembly 20, and absorb swelling of the electrode assembly 20 as much as possible, reducing the probability of stress concentration.

A test method for the compression rate of the buffer member 30 is as follows.
(1) Take samples with a dimension of 46 mm*50 mm for testing, with two parallel samples tested in each run.
(2) Confirm that there is only an empty spacer in a sample chamber and no sample; close a protective door; start the MISS software; select a channel for test in channel information; and click "Return to origin", "Pressure reset", and "Thickness reset" in sequence.
(3) Place the sample in the sample chamber of the in-situ swelling analyzer, so that centers of the sample and the spacer correspond to centers of two laser beams; close a protective door; fasten an explosion-proof buckle, ensuring that upper and lower spacers are aligned; input length and width values of the sample to the MISS system; and click "Start" for testing.
(4) Perform compression test at 0.5 mm/min; record thickness changes in real time until a recorded pressure value reaches 1 MPa, to obtain compression amount changes, and then obtain compression rates of the samples.

In some embodiments, the buffer member 30 is a porous material member.

The porous material may be made through foaming. Using such a porous foam material member can reduce manufacturing costs while improving compressibility of the buffer member 30.

In some embodiments, a material of the buffer member 30 includes at least one of polyvinyl chloride, polyethylene-vinyl acetate, polyethylene, polypropylene, polyurethane, polymethacrylimide, polyimide, polystyrene, and modified silicone rubber.

A type of a main material of the buffer member 30 is controlled, so that the material exhibits good electrolyte corrosion resistance, compressibility, and resilience, ensuring reliability over the full life cycle of the battery cell 100.

A battery 1000 according to an embodiment of a second aspect of this application includes the battery cell 100 according to the embodiment of the first aspect of this application.

An electric device 2000 according to an embodiment of a third aspect of this application includes the battery 1000 according to the embodiment of the second aspect of this application, the battery 1000 is configured to provide electrical energy for the electric device 2000. Thereby, with the above battery 1000, the safety and reliability in use of the electric device 2000 can be improved.

Optionally, as shown in FIG. 1, when the battery 1000 is used in a vehicle, the battery 1000 may be provided at a bottom, or a head, or a tail of the vehicle. The battery 1000 can be configured to supply power to the vehicle, for example, the battery 1000 can serve as an operating power source of the vehicle. The vehicle may further include a controller and a motor. The controller is configured to control the battery 1000 to supply power to the motor, for example, satisfy operating power requirements during start, navigation, and driving of the vehicle.

A battery 1000 according to a specific embodiment of this application and a vehicle containing the same are described below with reference to the drawings.

As shown in FIG. 1, the battery 1000 is provided at the bottom of the vehicle. As shown in FIG. 2 and FIG. 3, the battery 1000 includes a plurality of battery cells 100. As shown in FIG. 7 and FIG. 8, the battery cell 100 includes a casing 10, an electrode assembly 20, and a buffer member 30; the electrode assembly 20 and the buffer member 30 is provided in the casing 10; the electrode assembly 20 includes a wound electrode sheet 21 and separator 22; the electrode sheet 21 and the separator 22 are stacked and then wound around a winding axis to form the electrode assembly 20; the separator 22 forms the outermost side after winding; and an end 221 of the separator 22 in a winding direction is provided with a termination tape 23. The termination tape 23 includes a first tape segment 231 and a second tape segment 232; the first tape segment 231 covers the end 221 of the separator 22; the second tape segment 232 is located on one side of the first tape segment 231; and the second tape segment 232 protrudes from the separator 22, so that the termination tape 23 can fasten the electrode sheet 21 and the separator 22, stabilizing an overall structure of the electrode assembly 20, reducing a probability of displacement and deformation, reducing wrinkling of the electrode sheet 21, reducing a probability of internal short circuits, and the like.

In a stacking direction of the electrode sheet 21 and the separator 22 (the front-rear direction as shown in FIG. 8), the buffer member 30 covers the termination tape 23 and the separator 22.

The compression rate of the buffer member 30 under 1 MPa is L1, where L1≥50%; and a ratio of compression rates of the buffer member 30 to the termination tape 23 under 1 MPa is L1/L2, where 5≤L1/L2≤30.

A thickness of the buffer member 30 is H1, where 0.5 mm≤H1≤10 mm; and a thickness ratio of the buffer member 30 to the termination tape 23 is H1/H2, where 10≤H1/H2≤100.

A ratio of an area of a portion of the buffer member 30 covering the termination tape 23 to an area of the termination tape 23 is S1/S2, where S1/S2 is equal to 1.

The buffer member 30 can space the termination tape 23 and the separator 22 from an adjacent electrode assembly 20 or the casing 10. When the electrode assembly 20 swells, the buffer member 30 deforms, thereby alleviating to a certain extent stress concentration caused by the termination tape 23 with a certain thickness protruding from another portion, equalizing two forces on the two portions with a height difference, and prolonging the service life and improving the reliability of the battery cell 100.

In addition, during charge and discharge of the battery cell 100, the buffer member 30 supports the electrode assembly 20 to a certain extent, which can reduce deformation, thereby improving wrinkling of the electrode sheet 21 caused by swelling of the electrode assembly 20, and alleviating lithium or sodium precipitation during cycling of the battery cell 100.

Finally, it should be noted that the above embodiments are only intended to illustrate the technical solutions of this application, rather than to limit them; although this application is described in detail with reference to the foregoing embodiments, those of ordinary skill in the art should understand that modifications can still be made to the technical solutions recorded in the foregoing embodiments, or equivalent replacements can be made to some or all of the technical features thereof; and these modifications or replacements do not make the essence of the corresponding technical solutions depart from the scope of the technical solutions of the embodiments of this application, and should all be covered within the scope of the claims and specification of this application. In particular, as long as there is no structural conflict, the technical features mentioned in the various embodiments can be combined in any manner. This application is not limited to the specific embodiments disclosed herein, but includes all technical solutions falling within the scope of the claims.

## Claims

1. A battery cell, **characterized by** comprising:
a casing;
an electrode assembly, disposed in the casing, wherein the electrode assembly comprises an electrode sheet and a separator, the electrode sheet and the separator are stacked and then wound to form the electrode assembly, and the electrode assembly is provided with a winding end along a winding direction of the electrode assembly; and
a buffer member, disposed in the casing, wherein the buffer member covers at least a portion of the winding end along a stacking direction of the electrode sheet and the separator.

2. The battery cell according to claim 1, **characterized in that**
along the winding direction of the electrode assembly, an end of the electrode assembly is provided with a termination tape, and an end of the termination tape along the winding direction forms the winding end.

3. The battery cell according to claim 2, **characterized in that**
the termination tape comprises a first tape segment and a second tape segment, the first tape segment covers an end of the separator or an end of the electrode sheet, the second tape segment is located on one side of the first tape segment, and the buffer member covers at least a portion of the second tape segment.

4. The battery cell according to claim 2 or 3, **characterized in that**
the termination tape comprises a first tape segment and a second tape segment, the first tape segment covers an end of the separator or an end of the electrode sheet, the second tape segment is located on one side of the first tape segment, and the buffer member covers at least a portion of the first tape segment.

5. The battery cell according to any one of claims 2 to 4, **characterized in that** the electrode sheet and the separator are wound around a winding axis, the termination tape has opposite first end portion and second end portion in an extension direction of the winding axis, and the buffer member covers the first end portion and/or the second end portion.

6. The battery cell according to claim 5, **characterized in that** in the extension direction of the winding axis, a length dimension of the buffer member is not less than a length dimension of the termination tape.

7. The battery cell according to any one of claims 2 to 6, **characterized in that** a thickness ratio of the buffer member to the termination tape is H1/H2, wherein 10≤H1/H2≤100, preferably 10≤H1/H2≤20.

8. The battery cell according to any one of claims 2 to 7, **characterized in that** a ratio of an area of a portion of the buffer member covering the termination tape to an area of the termination tape is S1/S2, wherein 0.1≤S1/S2≤1, preferably 0.8≤S1/S2≤1.

9. The battery cell according to any one of claims 2 to 8, **characterized in that** along the stacking direction of the electrode sheet and the separator, the buffer member covers at least a portion of the separator and/or at least a portion of the electrode sheet.

10. The battery cell according to any one of claims 2 to 9, **characterized in that** a ratio of compression rates of the buffer member to the termination tape under 1 MPa is L1/L2, wherein 5≤L1/L2≤30, preferably 10≤L1/L2≤20.

11. The battery cell according to any one of claims 1 to 10, **characterized in that** along the winding direction of the electrode assembly, the end of the separator forms the winding end.

12. The battery cell according to claim 11, **characterized in that** a ratio of compression rates of the buffer member to the separator under 1 MPa is L1/L3, wherein 1≤L1/L3≤5, preferably 2≤L1/L3≤3.5.

13. The battery cell according to claim 10, **characterized in that** a thickness ratio of the buffer member to the separator is H1/H3, wherein 50≤H1/H3≤700.

14. The battery cell according to claim 13, **characterized in that**
a side of the end of the separator facing toward a center of the electrode assembly is provided with an adhesive material.

15. The battery cell according to any one of claims 1 to 14, **characterized in that**
along the winding direction of the electrode assembly, the end of the electrode sheet forms the winding end.

16. The battery cell according to claim 15, **characterized in that**
the electrode sheet has a thinned electrode sheet region, and the buffer member covers at least a portion of the thinned electrode sheet region.

17. The battery cell according to any one of claims 1 to 16, **characterized in that**
the electrode assembly comprises a flat region and a bent region connected to an end portion of the flat region, and the buffer member is arranged opposite at least one of the flat region and the bent region.

18. The battery cell according to claim 17, **characterized in that**
the end of the electrode sheet is located in the flat region, and the buffer member covers the end of the electrode sheet along the stacking direction of the electrode sheet and the separator.

19. The battery cell according to any one of claims 1 to 14, **characterized in that** the electrode assembly comprises a flat region and a bent region connected to an end portion of the flat region; and
the end of the electrode sheet is located in the bent region, and the buffer member is offset from the end of the electrode sheet.

20. The battery cell according to any one of claims 1 to 19, **characterized in that** the electrode assembly comprises the flat region and the bent region connected to the end portion of the flat region; and
along a stacking direction of the buffer member and the electrode assembly, an area of a projection of the buffer member on the casing is S3, and an area of a projection of a positive electrode active material region of the flat region on the casing is S4, wherein 0.3≤S3/S4≤1.1, preferably 0.5≤S3/S4≤0.9.

21. The battery cell according to any one of claims 1 to 20, **characterized in that** a thickness of the buffer member is H1, wherein 0.5 mm≤H1≤10 mm.

22. The battery cell according to any one of claims 1 to 21, **characterized in that** the compression rate of the buffer member under 1 MPa is L1, wherein L1≥50%, preferably L1≥60%.

23. The battery cell according to any one of claims 1 to 22, **characterized in that** the buffer member is a porous material member.

24. The battery cell according to any one of claims 1 to 23, **characterized in that** a material of the buffer member comprises at least one of polyvinyl chloride, polyethylene-vinyl acetate, polyethylene, polypropylene, polyurethane, polymethacrylimide, polyimide, polystyrene, and modified silicone rubber.

25. A battery, **characterized by** comprising the battery cell according to any one of claims 1 to 24.

26. An electric device, **characterized by** comprising the battery according to claim 25, wherein the battery is configured to provide electrical energy.
